# FASCICULE DE BREVET EUROPEEN

(11) **EP 3 775 824 B1**
(45) Date de publication et mention de la délivrance du brevet: **22.02.2023**
(21) Numéro de dépôt: 19720142.9
(22) Date de dépôt: 27.03.2019
(51) Int. Cl.: G01M 3/32, F17C 13/00

(54) **PROCÉDÉ DE CONTRÔLE D'ÉTANCHÉITÉ DE TÊTE DE RÉSERVOIR AVANT MISE EN SERVICE**
VEFAHREN ZUM TEST EINES CONTAINERVERSCHLUSSES VOR INBETRIEBNAHME
METHOD FOR TESTING A CONTAINER CLOSURE FOR LEAKS PRIOR TO USE

(30) Priorité: 05.04.2018 FR 1800314
(43) Date de publication de la demande: 17.02.2021
(73) Titulaire: AD VENTA, 26300 Châteauneuf-sur-Isère (FR)
(72) Inventeur: MUSSOT, Jean-Luc, 26100 VALENCE (FR); LABROT, Olivier, 26800 Portes-Les-Valence (FR)
(74) Mandataire: Novagraaf Technologies
(86) Numéro de dépôt international: PCT/FR2019/000040
(87) Numéro de publication internationale: WO 2019/193260

(56) Documents cités:
- WO-A1-2018/130564
- FR-A1- 2 486 701
- US-A1- 2005 236 778

## Description

La présente invention a pour objet un procédé de contrôle d'étanchéité de tête de réservoir avant mise en service.

Le secteur technique de l'invention est celui de la fabrication des ensembles réservoirs et bouteilles de gaz aptes à contenir et à délivrer du gaz sous pression et même haute pression, tel qu'en particulier de l'hydrogène, par l'intermédiaire d'une tête de réservoir fixée sur un bossage du réservoir.

Il est alors obligatoire, lors de la fabrication des ensembles réservoirs et après le montage d'une telle tête sur chaque réservoir, de contrôler l'étanchéité de la fixation, en général par vissage, des dites têtes de réservoirs pour éviter toute fuite éventuelle ultérieure quand les réservoirs sont remplis de gaz, surtout quand il s'agit d'hydrogène.

Il est connu pour cela de remplir chaque réservoir ou bouteille de gaz jusqu'à la pression de contrôle prédéterminée puis de contrôler si celle-ci se maintient pendant une durée suffisante pour en conclure qu'il n'y a pas de fuite. Cependant une telle opération nécessite un banc d'essai assez coûteux (de l'ordre de 1 M€ d'investissement), de grandes quantités de gaz à mettre en pression (tels que 35 m3 à la pression atmosphérique pour une bouteille de 50 litres à tester à 700 bar) et une durée du test d'au moins 20 minutes par bouteille : tout ceci est ainsi coûteux et long.

Le problème posé est donc de pouvoir contrôler l'étanchéité de la fixation des dites têtes de réservoirs lors de la fabrication des ensembles réservoirs, après le montage d'une telle tête sur chaque réservoir et avant tout remplissage complet, soit pour test soit pour être mis en service, de ces ensembles réservoirs (un ensemble réservoir étant constitué d'un réservoir ou bouteille équipé au moins de sa tête de réservoir), d'une part sans avoir besoin de banc d'essai coûteux ni donc de grande consommation de gaz surtout quand il s'agit d'hydrogène, et d'autre part suivant un procédé qui puisse être mis en œuvre dans un temps assez court, soit de moins de 5' par bouteille/réservoir.

Or on connaît par ailleurs mais dans d'autres domaines d'applications, soit essentiellement pour le contrôle d'étanchéité en opération après et quand les ensembles bouteilles/réservoirs sont en service et donc entièrement remplis de gaz sous pression, des têtes de réservoir telles que celles enseignées dans les demandes de brevet US 2005/0236778 et DE 102014010090 et qui comprennent deux étanchéités l'une dite interne principale et l'autre dite externe secondaire et dont l'espace, qu'elles délimitent entre elles, est relié par un conduit à l'extérieur de la bouteille de gaz sous pression considérée sur laquelle est fixée la dite tête de réservoir afin :
- dans le brevet américain de pouvoir y injecter un gaz à pression intermédiaire pour, d'une part, réduire le différentiel de pression de part et d'autre du joint interne et ainsi prolonger la durée de vie de ce joint, et, d'autre part, surveiller la valeur de cette pression intermédiaire pour détecter une fuite éventuelle de l'un ou l'autre joint,
- dans le brevet allemand de pouvoir placer un détecteur d'hydrogène à la sortie du dit conduit afin de détecter rapidement toute fuite du joint interne quand la bouteille est remplie d'un tel gaz sous pression.

Une solution au problème posé est ainsi un procédé de contrôle d'étanchéité de tête de réservoir destiné à être rempli d'un gaz sous haute pression, laquelle tête, de type connu comme dans les deux brevets cités ci-dessus, d'une part étant fixée dans un bossage situé sur l'enveloppe du dit réservoir délimitant une chambre intérieure apte à recevoir le gaz et débouchant dans celle-ci, et d'autre part comportant au moins deux dispositifs d'étanchéité dits intérieur et extérieur qui délimitent entre eux un espace intermédiaire dans lequel débouche un conduit qui traverse la tête de réservoir et communique avec l'extérieur de celui-ci, et tel que suivant l'invention:
- on effectue le dit contrôle lors de la fabrication de l'ensemble réservoir, constitué d'un réservoir équipé au moins de sa tête de réservoir, et après le montage de celle-ci, et avant que ce réservoir soit entièrement rempli de gaz sous pression soit pour test soit pour être mis en service à sa pression d'utilisation et avec son gaz destiné à y être stocké,
- on injecte un gaz sous pression par le dit conduit dans l'espace intermédiaire entre les deux dispositifs d'étanchéité,
- on arrête l'injection de gaz à une pression donnée,
- on mesure la valeur de la dite pression par le dit conduit,
- si la mesure de la valeur de la dite pression indique une baisse de celle-ci, on contrôle de l'extérieur et autour de la tête si on détecte une fuite de gaz en provenance du joint externe,
- et si ce contrôle de fuite du joint externe est négatif, on en déduit que le joint interne fuit.

Ainsi, grâce à un tel procédé suivant l'invention, on n'a pas besoin de remplir toute la chambre intérieure du réservoir pour contrôler l'étanchéité de fixation de la tête de réservoir, une petite quantité de gaz étant suffisante, ce qui réduit énormément d'une part la durée de l'opération de test, bien en dessous des 5', et d'autre part le coût (grâce à la fois à la faible quantité de gaz nécessaire, à la diminution de la durée du contrôle et à la réduction importante de l'investissement du banc d'essai) sans compter l'amélioration de la sécurité.

Le résultat est un nouveau procédé de contrôle d'étanchéité de tête de réservoir/bouteille qui répond ainsi bien au problème posé dont en particulier que ce contrôle ait lieu lors de la fabrication des ensembles réservoirs, après le montage d'une telle tête sur chaque réservoir et sans nécessité de remplissage complet de celui-ci, et donc en particulier avant tout remplissage et usage opérationnel de ces ensembles réservoirs, et dont les avantages évoqués ci-dessus en prouvent l'intérêt. La description et les figures ci-jointes en donnent un exemple de réalisation mais d'autres modes de réalisation sont possibles dans le cadre de la portée de la présente invention.
La figure 1A est une vue de dessus d'un réservoir ou bouteille de gaz équipée d'une tête de réservoir suivant l'invention, et constituant ainsi un ensemble réservoir.
La figure 1B est une vue en coupe suivant le plan A,A' de la figure 1A.
La figure 2 est une vue agrandie du détail C de la figure 1B montrant la tête de réservoir permettant la mise en oeuvre du procédé suivant l'invention.

Suivant la représentation des figures, une tête 2 de réservoir, destiné à être rempli d'un gaz sous haute pression, est fixée, de préférence par vissage 11, dans un bossage 4 situé sur l'enveloppe 1 du dit réservoir et débouchant dans celle-ci, la dite tête 2 obturant ainsi l'orifice 5 de ce bossage ; laquelle enveloppe 1 délimite une chambre intérieure 3 apte à recevoir le gaz et est réalisée dans un matériau et suivant une épaisseur lui assurant de résister à la pression de stockage du gaz tel que jusqu'à au moins 100 bar, et même 300 bar et jusqu'à au moins 700 bar pour de l'hydrogène.

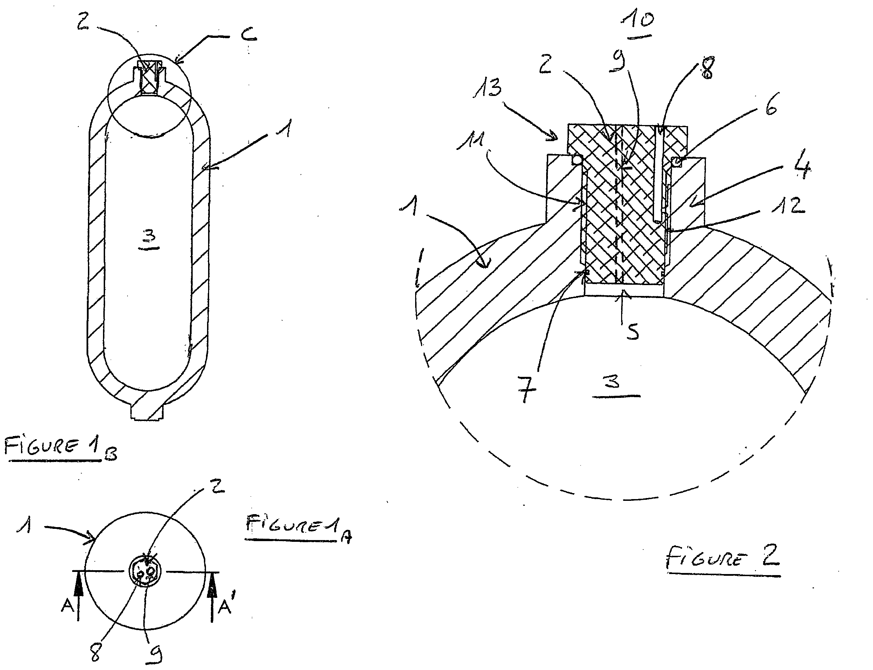

Cette tête 2 de réservoir peut comporter, suivant les utilisations, divers conduits (tel que celui 9 représenté sur les figures 1A et 2, et débouchant sur le dessus de la tête 2) qui traversent de part en part l'épaisseur de la tête 2 et qui font communiquer la chambre 3 et l'extérieur 10 et qui reçoivent alors, à leur extrémité débouchant à l'extérieur, des raccords de tuyauterie, des bouchons de fermeture, des vannes ....

Cette tête 2 de réservoir comprend au moins deux dispositifs d'étanchéité 6,7, de préférence des joints toriques, dits intérieur (pour celui situé le plus proche de la chambre 3) et extérieur (pour celui situé le plus proche de l'extérieur 10 du réservoir) qui délimitent entre eux un espace intermédiaire 12 dans lequel débouche un conduit 8 qui traverse la tête 2 de réservoir et communique avec l'extérieur 10 de celui-ci.

Ainsi, on peut contrôler l'étanchéité de la tête 2 du réservoir suivant le procédé de l'invention en suivant les étapes opératoires de test telles que :
- on effectue le dit contrôle lors de la fabrication de l'ensemble réservoir, constitué du dit réservoir équipé au moins de sa tête 2 de réservoir, après le montage de celle-ci et avant que ce réservoir soit rempli de gaz sous haute pression,
- on injecte un gaz sous pression par le conduit 8 dans l'espace intermédiaire 12 entre les deux dispositifs d'étanchéité 6,7,
- on arrête l'injection de gaz à une pression donnée P,
- on mesure la valeur de la dite pression (P) par le dit conduit 8,
- si la mesure de la valeur de la dite pression P indique une baisse de celle-ci, on contrôle de l'extérieur 13 et autour de la tête 2 si on détecte une fuite de gaz en provenance du joint externe 6,
- et si le contrôle de fuite du joint externe 6 est négatif, on en déduit que le joint interne 7 fuit.

Dans une application préférentielle, on utilise de l'hydrogène comme gaz sous pression et à une pression jusqu'à au moins 100 bar, et même 300 bar et jusqu'à au moins 700 bar, sachant que le procédé suivant la présente invention est cependant le plus intéressant quand on a besoin d'une quantité de gaz importante pour réaliser l'essai (ratio volume /pression) soit donc surtout pour des applications à 300/350 bar et 700bar.

## Revendications

1. Procédé de contrôle d'étanchéité de tête (2) de réservoir destiné à être rempli d'un gaz sous haute pression, entre 100 et 700 bar, laquelle tête (2) d'une part étant fixée dans un bossage (4) situé sur l'enveloppe (1) du dit réservoir délimitant une chambre intérieure (3) apte à recevoir le gaz et débouchant dans celle-ci, et d'autre part comportant au moins deux dispositifs d'étanchéité (6,7) dits intérieur et extérieur qui délimitent entre eux un espace intermédiaire (12) dans lequel débouche un conduit (8) qui traverse la tête (2) de réservoir et communique avec l'extérieur (10) de celui-ci, tel que :
- on injecte un gaz sous pression par le conduit (8) dans l'espace intermédiaire (12) entre les deux dispositifs d'étanchéité (6,7),
- on arrête l'injection de gaz à une pression donnée (P),
- on mesure la valeur de la dite pression (P) par le dit conduit (8)
**caractérisé en ce que** :
- on effectue le dit contrôle lors de la fabrication de l'ensemble réservoir, constitué du dit réservoir équipé au moins de sa tête 2 de réservoir, après le montage de celle-ci et avant que ce réservoir soit rempli de gaz sous haute pression,
- et si la mesure de la valeur de la dite pression (P) indique une baisse de celle-ci, on contrôle de l'extérieur (13) et autour de la tête (2) si on détecte une fuite de gaz en provenance du joint externe (6).

2. Procédé de contrôle d'étanchéité de tête (2) de réservoir suivant la revendication 1, caractérisé en ce si le contrôle de fuite du joint externe (6) est négatif, on en déduit que le joint interne (7) fuit.

3. Procédé de contrôle d'étanchéité de tête (2) de réservoir suivant l'une quelconque des revendications 1 et 2, **caractérisé en ce qu'**on utilise de l'hydrogène comme gaz sous pression.

4. Procédé de contrôle d'étanchéité de tête (2) de réservoir suivant l'une quelconque des revendications 1 à 3, **caractérisé en ce qu'**on fixe la tête (2) de réservoir dans le bossage (4) par vissage et on utilise comme dispositifs d'étanchéité (6,7) des joints toriques.

## Patentansprüche

1. Verfahren zum Prüfen einer Dichtheit eines Kopfes (2) eines Behälters, der dafür bestimmt ist, mit einem Hochdruckgas zwischen 100 und 700 bar gefüllt zu werden, wobei der Kopf (2) einerseits in einem Vorsprung (4) befestigt ist, der auf der Verkleidung (1) des Behälters gelegen ist, die eine Innenkammer (3) begrenzt, die geeignet ist, um das Gas aufzunehmen, und in dieser mündet, und andererseits mindestens zwei Dichtheitsvorrichtungen (6, 7) aufweist, innenseitig und außenseitig genannt, die zwischen sich einen Zwischenraum (12) begrenzen, in den eine Leitung (8) mündet, die den Kopf (2) des Behälters durchquert und mit der Außenseite (10) von diesem kommuniziert, wie zum Beispiel:
- Injizieren eines Hochdruckgases durch die Leitung (8) in den Zwischenraum (12) zwischen den zwei Dichtheitsvorrichtungen (6, 7),
- Anhalten des Injizierens des Gases bei einem gegebenen Druck (P),
- Messen des Wertes des gegebenen Drucks (P) durch die Leitung (8)
**dadurch gekennzeichnet, dass:**
- man das Prüfen während der Herstellung der Behälteranordnung, die aus diesem Behälter besteht, der mindestens mit seinem Kopf 2 des Behälters ausgerüstet ist, nach der Montage von diesem und bevor der Behälter mit Hochdruckgas gefüllt wird, ausführt,
- und falls das Messen des Wertes des Drucks (P) eine Senkung von diesem anzeigt, man die Außenseite (13) und um den Kopf (2) herum prüft, ob man ein Gasleck aus der äußeren Dichtung (6) erfasst.

2. Verfahren zum Prüfen der Dichtheit des Kopfes (2) des Behälters nach Anspruch 1, **dadurch gekennzeichnet, dass,** falls das Prüfen des Lecks der äußeren Dichtung (6) negativ ist, man ableitet, dass die innere Dichtung (7) leckt.

3. Verfahren zum Prüfen der Dichtheit des Kopfes (2) des Behälters nach einem der Ansprüche 1 und 2, **dadurch gekennzeichnet, dass** man Wasserstoff als Hochdruckgas verwendet.

4. Verfahren zum Prüfen der Dichtheit des Kopfes (2) des Behälters nach einem der Ansprüche 1 bis 3, **dadurch gekennzeichnet, dass** man den Kopf (2) des Behälters in dem Vorsprung (4) durch Verschraubung befestigt und man Dichtungsringe als Dichtheitsvorrichtungen (6, 7) verwendet.

## Claims

1. Method for leak testing a tank head (2) intended to be filled with a gas under high pressure, between 100 and 700 bar, which head (2) on the one hand being fastened inside a boss (4) located on the wall (1) of said tank delimiting an inner chamber (3) capable of receiving the gas and opening therein, and on the other hand including at least two sealing devices (6, 7) referred to as the inner and outer sealing devices which delimit therebetween an intermediate space (12) into which opens a duct (8) which passes through the tank head (2) and communicates with the outside (10) thereof, such that:
- pressurised gas is injected via the duct (8) into the intermediate space (12) between the two sealing devices (6, 7),
- the injection of gas is halted at a given pressure (P),
- the magnitude of said pressure (P) is measured via said duct (8),
**characterised in that**
- said test is carried out during the manufacture of the tank assembly, constituted by said tank at least equipped with the tank head 2 thereof, after fitting same and before this tank is filled with high-pressure gas,
- and if the measurement of the magnitude of said pressure (P) indicates a drop thereof, the environment surrounding the head (2) is tested from the outside (13) to detect whether there is a gas leak originating from the outer seal (6).

2. Method for leak testing a tank head (2) according to claim 1, **characterised in that** if the leak test is negative for the outer seal (6), it is deduced that the inner seal (7) is leaking.

3. Method for leak testing a tank head (2) according to any of claims 1 and 2, **characterised in that** the pressurised gas used is hydrogen.

4. Method for leak testing a tank head (2) according to any of claims 1 to 3, **characterised in that** the tank head (2) is fastened in the boss (4) by screwing and the sealing devices (6, 7) used are O-ring seals.
